(19) Europäisches Patentamt
European Patent Office
Office européen des brevets

(11) **EP 4 075 223 A1**

(12) **EUROPÄISCHE PATENTANMELDUNG**

(43) Veröffentlichungstag:
**19.10.2022 Patentblatt 2022/42**

(21) Anmeldenummer: **21168664.7**

(22) Anmeldetag: **15.04.2021**

(51) Internationale Patentklassifikation (IPC):
***G05B 23/02*** *(2006.01)*

(52) Gemeinsame Patentklassifikation (CPC):
**G05B 23/0245**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Lenz, Eric**
  **64289 Darmstadt (DE)**
• **Bierweiler, Thomas**
  **76131 Karlsruhe (DE)**
• **Grieb, Herbert**
  **76316 Malsch (DE)**
• **Konigorski, Ulrich**
  **76646 Bruchsal (DE)**
• **Labisch, Daniel**
  **76149 Karlsruhe (DE)**

(54) **URSACHENANALYSE BEI ANOMALIEN BEIM BETRIEB EINER TECHNISCHEN ANLAGE**

(57) Vorgeschlagen wird ein Verfahren zur Ermittlung einer Ursache für eine Anomalie beim Betrieb einer technischen Anlage, umfassend:

a) Ermitteln eines qualitativen Zusammenhangs zwischen Eingangsgrößen und Ausgangsgrößen für eine Komponente (1, 2, 3, 9, VE1, VE2, VE3) der technischen Anlage anhand eines topologischen Aufbaus der technischen Anlage, wobei der Zusammenhang angibt, welchen Einfluss eine Eingangsgröße auf eine Ausgangsgröße aufweist,

b) Wiederholen des Verfahrensschrittes a bei im Wesentlichen allen Komponenten (1, 2, 3, 9, VE1, VE2, VE3) eines Anlagenteils der technischen Anlage oder bei im Wesentlichen allen Komponenten (1, 2, 3, 9, VE1, VE2, VE3) der technischen Anlage,

c) Betreiben der technischen Anlage und Ermitteln der Ausgangsgrößen,

d) Feststellen wenigstens einer Anomalie als qualitative Abweichung einer Ausgangsgröße von ihrem Sollwert,

e) Ermitteln von möglichen Ursachen für die Anomalie aus einer Verknüpfung der Anomalie mit dem zuvor bestimmten qualitativen Zusammenhang zwischen Eingangsgröße und Ausgangsgrößen der Komponenten (1, 2, 3, 9, VE1, VE2, VE3) der technischen Anlage,

f) Hinterlegen der möglichen Ursachen in einem Datenspeicher und/oder visuelle Darstellung der möglichen Ursachen für einen Operator der technischen Anlage.

FIG 1

**Beschreibung**

Die Erfindung betrifft ein Verfahren zur Ermittlung einer Ursache für eine Anomalie beim Betrieb einer technischen Anlage nach Anspruch 1. Zudem betrifft die Erfindung ein Computerprogramm mit durch einen Computer ausführbaren Programmcodeanweisungen nach Anspruch 10. Außerdem betrifft die Erfindung ein Speichermedium mit einem durch einen Computer ausführbaren Computerprogramm nach Anspruch 11 und ein Computersystem nach Anspruch 12.

Eine technische Anlage, insbesondere Fertigungs- oder Prozessanlage, wird in der Regel fortwährend überwacht, um ungünstige Betriebszustände zu vermeiden. Bereits die Erkennung einer Abweichung im Betrieb der technischen Anlage (Anomalieerkennung) liefert hierbei einen Mehrwert, auch wenn die Suche nach einer Ursache für die Anomalie komplett manuell erfolgen muss. Der Mehrwert kann gesteigert werden, wenn auch eine Information darüber vorliegt, welche Komponenten der technischen Anlage auf welche Art und Weise von ihrem Normalverhalten abweichen (Symptomerkennung).

Eine manuelle Suche der Ursache ist mühselig und aufwändig. Es sind daher verschiedene Bestrebungen bekannt, die Ursachen für die Abweichungen automatisch bestimmen zu können, so dass das Anlagenpersonal direkt mit der Behebung der Ursache beginnen kann. Grundsätzlich kann hierbei zwischen zwei Vorgehensweisen unterschieden werden.

Ein erster Lösungsansatz verfolgt eine rein datenbasierte Ursachensuche. Eine Identifizierung der Ursache ist dabei jedoch nur möglich, wenn die Ursache in der Vergangenheit bereits aufgetreten und entsprechend klassifiziert worden ist.

Ein zweiter Lösungsansatz basiert auf Modellen. Dabei wird ausgehend von der Anlagenstruktur der technischen Anlage (bspw. dem Rohrleitungs- & Instrumentenfließschema) ein Modell der technischen Anlage bzw. deren Komponenten erzeugt. Dieses wird anschließend dazu genutzt, erkannten Symptomen mögliche Ursachen zuzuordnen.

Zur Modellierung kommen verschiedenste Verfahren in Frage. In der EP 2568348 A1, der EP 2587328 A1 und der EP 2587329 A1 werden eine derartige Modellierung auf Basis von sogenannten "Signed Digraphs" beschrieben. Hiermit können für vergleichsweise kleine Anlagentopologien (in der Größe einer Forschungsanlage) gute Ergebnisse bei der Ursachenermittlung erzielt werden. Für größere, reale technische Anlage sind die hierin beschriebenen Verfahren jedoch weniger gut geeignet. Insbesondere können Verzweigungen in der Anlagentopologie zu leeren Ursachenmengen oder zu übermäßig vielen möglichen Ursachen führen.

[1] und [2] geben in einer Review einen systematischen Überblick über mögliche Algorithmen zur Ursachenanalyse.

[1] Venkat Venkatasubramanian, Raghunathan Rengaswamy, Kewen Yin, Surya N. Kavuri; A review of process fault detection and diagnosis Part I: Quantitative model-based methods; Computers and Chemical Engineering, issue 27, pp.293-31t,2003.

[2] Venkat Venkatasubramanian, Raghunathan Rengaswamy, Surya N. Kavuri; A review of process fault detection and diagnosis Part II: Qualitative Models and Search Strategies; Computers and Chemical Engineering, issue 27, pp.313-326, 2003.

Ein neuerer, auf dem Einsatz von Bond-Graphen basierender Ansatz zur Ursachenanalyse wird in [3] und [4] beschrieben:

[3] Borutzky, W.; Bond Graphs for Modelling, Control and Fault Diagnosis of Engineering Systems. Sankt Augustin, Deutschland: Springer International Publishing Switzerland, 2017.

[4] Prakash, O., Samantaray, A. K., Bhattacharyya, R; Optimal Adaptive Threshold and Mode Fault Detection for Model-Based Fault Diagnosis of Hybrid Dynamical Systems. In M. Sayed-Mouchaweh, Fault Diagnosis of Hybrid Dynamic and Complex Systems (pp. 45-78), 2018. Douai, Frankreich: Springer International Publishing AG.

Allen hierin genannten Verfahren wohnen jedoch eine verhältnismäßig große Komplexität und ein hoher Modellierungsaufwand inne.

Der Erfindung liegt die Aufgabe zugrunde, ein Verfahren zur Ermittlung einer Ursache für eine Anomalie beim Betrieb einer technischen Anlage anzugeben, das effizient und automatisiert durchgeführt werden kann.

Diese Aufgabe wird gelöst durch ein Verfahren zur Ermittlung einer Ursache für eine Anomalie beim Betrieb einer technischen Anlage, insbesondere Fertigungs- oder Prozessanlage, nach Anspruch 1. Außerdem wird die Aufgabe gelöst durch ein Computerprogramm mit durch einen Computer ausführbaren Programmcodeanweisungen nach Anspruch 10. Außerdem wird die Aufgabe gelöst durch ein Speichermedium mit einem durch einen Computer ausführbaren Computerprogramm nach Anspruch 11 und ein Computersystem nach Anspruch 12. Vorteilhafte Weiterbildungen ergeben sich aus den abhängigen Ansprüchen.

Gemäß Anspruch 1 umfasst ein erfindungsgemäßes Verfahren zur Ermittlung einer Ursache für eine Anomalie beim Betrieb einer technischen Anlage, insbesondere Fertigungs- oder Prozessanlage, die folgenden Verfahrensschritte:

a) Ermitteln eines qualitativen Zusammenhangs zwischen Eingangsgrößen und Ausgangsgrößen für eine Komponente der technischen Anlage anhand eines topologischen Aufbaus der technischen Anlage, wobei der Zusammenhang angibt, welchen Einfluss eine Eingangsgröße auf eine Ausgangsgröße aufweist,

b) Wiederholen des Verfahrensschrittes a bei im Wesentlichen allen Komponenten eines Anlagenteils der technischen Anlage oder bei im Wesentlichen allen Komponenten der technischen Anlage,

c) Betreiben der technischen Anlage und Ermitteln der Ausgangsgrößen,

d) Feststellen wenigstens einer Anomalie als qualitative Abweichung einer Ausgangsgröße von ihrem Sollwert,

e) Ermitteln von möglichen Ursachen für die Anomalie aus einer Verknüpfung der Anomalie mit dem zuvor bestimmten qualitativen Zusammenhang zwischen Eingangsgröße und Ausgangsgrößen der Komponenten der technischen Anlage,

f) Hinterlegen der möglichen Ursachen in einem Datenspeicher und/oder visuelle Darstellung der möglichen Ursachen für einen Operator der technischen Anlage.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, wie beispielsweise Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen in der Regel über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind.

Bei einer Komponente kann es sich beispielsweise um einen Reaktor, eine Pumpe oder ein Ventil handeln. Beispielsweise reagiert eine Ventilkomponente auf eine Öffnungsbewegung (als Eingangsgröße) des Ventilverschlusses mit einer Erhöhung der durchgelassenen Fluidmenge (als Ausgangsgröße). Diese Zusammenhänge werden jedoch nicht quantitativ (z.B. Öffnungsbewegung mit 5 cm Hub ergibt eine Durchflusserhöhung um 70%), sondern rein qualitativ bestimmt (z.B. "Eine Öffnungsbewegung führt zu einer Erhöhung der Durchflussmenge"). Ein Zufluss in eine Komponente "Tank" beispielsweise stellt eine Eingangsgröße dar, die auf einen Füllstand des Tanks als Ausgangsgröße einen Einfluss aufweist. Der qualitative Zusammenhang lautet für dieses Beispiel: "Ein positiver Zufluss in den Tank führt zu einer Zunahme des Füllstands in dem Tank".

Die Informationen zur Bestimmung des Modells werden einem topologischen Aufbau der technischen Anlage entnommen. Dabei handelt es sich insbesondere um ein Rohrleitungs- und Instrumentenfließschema. Bei den hierin enthaltenen Komponenten handelt es sich in der Regel um Standardbauteile, deren prinzipielle (d.h. qualitative) Funktionsweise bekannt ist oder, im Ausnahmefall, durch einfache Versuche bekannt gemacht werden kann.

Nach der Ermittlung der qualitativen Zusammenhänge werden die Ausgangsgrößen der einzelnen Komponenten beim Betrieb der technischen Anlage hinsichtlich Anomalien untersucht. Eine Anomalie ist dabei als qualitative Abweichung einer Ausgangsgröße von ihrem Sollwert definiert. Die Ausgangsgröße "Füllstand eines Tanks" kann beispielsweise die Anomalie "Füllstand des Tanks ist zu gering" aufweisen. Dabei können beim Feststellen der Anomalie an sich bekannte Verfahren zur Anomalieerkennung verwendet werden.

Diese Anomalien werden anschließend auf geeignete Art und Weise mit dem zuvor bestimmten qualitativen Zusammenhang verknüpft, um so auf mögliche Ursachen, im besten Fall auf nur eine einzige mögliche Ursache, schließen zu können.

Zuletzt werden die Ergebnisse der Ursachenermittlung in einem Datenspeicher hinterlegt und/oder einem Operator der technischen Anlage visuell dargestellt.

Mit dem erfindungsgemäßen Verfahren ist es möglich, nur mit dem Wissen der Anlagenstruktur automatisch einen qualitativen Zusammenhang zu bestimmen, welches die möglichen und modellierten Ursachen (Eingangsgrößen) auf die Abweichungen der Ausgangsgrößen (Symptome) abbildet. Dieses Verfahren skaliert im Gegensatz zu den zuvor beschriebenen Verfahren sehr gut für größere Anlagentopologien.

Es kann sinnvoll sein, noch weitere Ausgangsgrößen basierend auf dem gemessenen, bereits vorhandenen Ausgangsgrößen der Komponenten zu definieren. So kann beispielsweise bei fluidischen Komponenten die Unterscheidbarkeit verschiedener Ursachen positiv beeinflusst werden, wenn nicht nur der Füllstand (Druck) von Tanks, sondern auch die Füllstandsdifferenzen zu anderen Tanks beachtet werden.

Hierin unterscheidet sich die qualitative Herangehensweise gemäß dem erfindungsgemäßen Verfahren besonders deutlich von einer Modellierung mit "normalen", d.h. quantitativen Zahlenwerten. Im letzteren Fall würde eine lineare Kombination von zusätzlichen Ausgangsgleichungen keine neuen Informationen liefern.

Bevorzugt wird in dem Datenspeicher zusätzlich eine Information darüber hinterlegt, wie groß eine Wahrscheinlichkeit dafür ist, dass eine bestimmte, zuvor ermittelte Ursache für die Anomalie (tatsächlich) ursächlich bzw. ihr zuzuordnen ist. Im Allgemeinen kann als Ergebnis des Verfahrens nicht nur eine mögliche Ursache für die Anomalie ermittelt worden sein, sondern eine Mehrzahl von Ursachen. Für diesen Fall können Kenngrößen definiert, mitausgegeben und ausgewertet werden, die angeben, wie hoch die Wahrscheinlichkeit ist, dass es sich bei der jeweiligen Ursache auch um die tatsächliche Ursache für die Anomalie handelt.

Den jeweiligen qualitativen Zusammenhängen können wenigstens ein quantitativer Zusammenhang zwischen den Eingangsgrößen der Komponenten und den Ausgangsgrößen der Komponenten hinzugefügt werden, um bei manchen Fallkonstellationen die Genauigkeit des Verfahrens zu erhöhen, ohne den Aufwand signifikant zu erhöhen.

Bei einer besonders bevorzugten Weiterbildung der Erfindung umfasst der qualitative Zusammenhang wenigstens vier Unterscheidungen:

- eine Eingangsgröße mit einem ersten Vorzeichen bewirkt eine Ausgangsgröße mit dem ersten Vorzeichen,
- eine Eingangsgröße mit einem ersten Vorzeichen bewirkt eine Ausgangsgröße mit dem zweiten, von dem ersten verschiedenen Vorzeichen,
- die Eingangsgröße hat keinen Einfluss auf die Ausgangsgröße,
- es ist nicht bekannt, ob die Eingangsgröße einen Einfluss auf die Ausgangsgröße hat.

Ein Zusammenhang zwischen Ausgangsgrößen y (als Vektor) und Eingangsgrößen u (als Vektor) kann allgemein mit einem Übertragungsverhalten G (als Matrix) folgendermaßen beschrieben werden:

$$y = G * u$$

$$\text{mit} \quad G = \begin{bmatrix} \uparrow & o & x \\ \downarrow & \downarrow & \uparrow \end{bmatrix}$$

Dabei bedeutet das Symbol $\uparrow$, dass eine Eingangsgröße mit einem ersten Vorzeichen (z.B. "+") eine Ausgangsgröße mit demselben ersten Vorzeichen (z.B. "+") bewirkt. Das Symbol $\downarrow$ bedeutet, dass eine Eingangsgröße u mit einem ersten Vorzeichen (z.B. "+") eine Ausgangsgröße y mit einem zweiten, von dem ersten verschiedenen Vorzeichen (z.B. "-") bewirkt. Das Symbol $o$ bedeutet, dass eine Eingangsgröße keinen Einfluss auf eine Ausgangsgröße hat. Und das Symbol $x$ bedeutet, dass ein Zusammenhang zwischen einer Eingangsgröße und einer Ausgangsgröße nicht bekannt ist. Die qualitativen Abhängigkeiten werden dabei durch die zuvor erläuterten symbolischen Parameter ausgedrückt.

Wie bereits erwähnt, muss nicht jeder Zusammenhang qualitativ ausgedrückt werden. Ein Regler kann beispielsweise qualitativ mittels

$$u = k_R e, \qquad k_R > 0$$

charakterisiert werden (u: Ursache, e: Messgröße). Die Bestimmung einer Regelabweichung wird jedoch quantitativ mit

$$e = w - y$$

modelliert (e: Regelabweichung, w: Ursache, y: Messgröße). Die gemischte Modellierung von qualitativen und festen quantitativen Zusammenhängen gestaltet sich dahingehend als vorteilhaft, dass hierbei viele innere Zusammenhänge der Komponenten auch bei den Umformungen erhalten bleiben, die unabhängig von den tatsächlich unbekannten Parametern sind. Dies reduziert die Anzahl der am Ende enthaltenen X-Einträge (Zusammenhang zwischen Ursache und Symptom unbekannt) bzw. den Verzweigungen während der Ursachensuche wesentlich und gestaltet das gesamte Verfahren dadurch deutlich effizienter.

Die Ermittlung der Zusammenhänge für die wenigstens eine Komponente kann wie folgt durchgeführt werden. In einem ersten Schritt werden die Zusammenhänge von Komponenten und die von Kopplungen zwischen den Kopplungen in einem einzigen Gleichungssystem zusammengefasst. In diesem werden zunächst die Parameter mit dem Wert "unendlich" behandelt. Prinzipiell geschieht dies, indem die jeweiligen Zeilen, in denen ein solcher Parameter auftritt, durch diesen geteilt und dann ein Grenzübergang durchgeführt wird. Um die Größe

des Gleichungssystems zu reduzieren, werden einfache Gleichungen der Art $0 = x_i + x_j$ und $0 = x_k$, also einfache 1:1-Beziehungen zwischen zwei Größen und feste Nullgrößen (aufgrund der linearen Modellierung kann einer Größe kein konstanter Wert außer Null zugewiesen werden), direkt berücksichtigt und aufgelöst.

Letztlich liegt dann ein Gleichungssystem der Form

$$0 = \begin{bmatrix} M_x & M_y & M_u \end{bmatrix} \begin{bmatrix} x \\ y \\ u \end{bmatrix}$$

vor, wobei u der Vektor der Eingangsgrößen und y der Vektor der Ausgangsgrößen ist und alle weiteren "inneren" Größen aus der Modellierung in x zusammengefasst sind. Formal ergibt sich über

$$\begin{bmatrix} x \\ y \end{bmatrix} = \begin{bmatrix} M_x & M_y \end{bmatrix}^{-1} M_U u$$

die Lösung

$$y = \begin{bmatrix} 0 & 1 \end{bmatrix} \begin{bmatrix} M_x & M_y \end{bmatrix}^{-1} M_U u$$

bzw.

$$G = \begin{bmatrix} 0 & 1 \end{bmatrix} \begin{bmatrix} M_x & M_y \end{bmatrix}^{-1} M_U$$

für das Übertragungsverhalten bzw. die Übertragungsmatrix G. Dabei wird hier für G jedoch kein numerischer Ausdruck gesucht, sondern die Einträge in G sollen den zuvor beschriebenen qualitativen Werten ($\uparrow,\downarrow,\bigcirc,x$) entsprechen.

Für kleine bis mittlere technische Anlagen (die Grenze hängt dabei stark von den inneren Zusammenhängen der Anlage ab) können diese Gleichungen symbolisch umgeformt werden. Dazu werden die Gleichungen in der Matrixform

| $x_1$ | $x_2$ | $x_3$ | $y_1$ | $y_1$ | $u_1$ | $u_1$ |
|-------|-------|-------|-------|-------|-------|-------|
| * | * | * | * | * | * | * |
| * | * | * | * | * | * | * |
| * | * | * | * | * | * | * |
| * | * | * | * | * | * | * |
| * | * | * | * | * | * | * |

dargestellt. Dabei stellen alle *-Werte allgemeine Einträge dar, die entweder einer Zahl, einem Parameter oder auch einem Polynom in den Parametern entsprechen. Die meisten dieser Einträge sind jedoch 0, da die beschriebene Art der Modellierung auf sehr gering besetzte Matrizen führt. Durch elementare Matrixumformungen erhält man letztlich (wobei das symbolische Gleichungssystem im Grunde mit beliebigen Verfahren gelöst werden kann):

| $x_1$ | $x_2$ | $x_3$ | $y_1$ | $y_1$ | $u_1$ | $u_1$ |
|-------|-------|-------|-------|-------|-------|-------|
| * | * | * | * | * | * | * |
|  | * | * | * | * | * | * |
|  |  | * | * | * | * | * |
|  |  |  | $a_1$ |  | $b_{11}$ | $b_{12}$ |
|  |  |  |  | $a_2$ | $b_{21}$ | $b_{22}$ |

Bei diesen Umformungen wird auf Divisionen komplett verzichtet, so dass $a_i$ und $b_{ij}$ Polynome in den Parametern darstellen. Es ist nicht wesentlich, dass im linken Teil in den unteren Zeilen die Einheitsmatrix steht. Es ist allerdings ratsam, bei der Bestimmung der Faktoren in den einzelnen Schritten den größten gemeinsamen Teiler der betroffenen Polynome zu berücksichtigen, und von Zeit zu Zeit auch gemeinsame Faktoren aus einer Zeile zu kürzen, damit die Anzahl der Summanden der Polynome nicht zu stark steigt.

Da lediglich die qualitative Abhängigkeit der $y_i$ von den $u_j$ interessiert, wird danach eine Definitheitsprüfung vorgenommen. Das bedeutet, dass festgestellt wird, ob das Vorzeichen der einzelnen Größen unabhängig von den Parameterwerten, unter Berücksichtigung der zulässigen Wertebereiche für die Parameter, ist. Definiert man die "Definitheitsfunktion" $[\![\cdot]\!]$ als

$[\![\cdot]\!]$ = ↑, wenn x>0 für alle zulässigen Parameterwerte

$[\![\cdot]\!]$ = ↓, wenn x<0 für alle zulässigen Parameterwerte

$[\![\cdot]\!]$ = o, wenn x=0 für alle zulässigen Parameterwerte

$[\![\cdot]\!]$ = X sonst,

ergeben sich die Einträge $g_{ij}$ der gesuchten Matrix G über

$$g_{ij} = \downarrow [\![a_i]\!][\![b_{ij}]\!]$$

mit den Rechenregeln

| · | ↑ | ↓ | ○ | x |
|---|---|---|---|---|
| ↑ | ↑ | ↓ | ○ | x |
| ↓ | ↓ | ↑ | ○ | x |
| ○ | ○ | ○ | ○ | ○ |
| x | x | x | ○ | x |

Es ist dabei darauf zu achten, dass jeweils Zähler und Nenner vor der Definitheitsprüfung keine gemeinsamen Teiler mehr besitzen, da diese das Ergebnis verfälschen, wenn der gemeinsame Teiler indefinit (x) ist, die übrigen Faktoren aber nicht.

Bei mittleren bis großen Systemen ist der symbolische Ansatz nicht mehr gangbar, da während der Umformungen Polynome mit zu vielen Gliedern entstehen, die zumindest in den Zwischenschritten nicht kürzbar sind. Dadurch nimmt der Zeit- und der Speicherbedarf exponentiell zu. Daher wird in diesen Fällen auf den im Folgenden beschriebenen heuristischen Ansatz zurückgegriffen.

1. Zuerst wird das Gleichungssystem numerisch für einen zufällig gewählten Parameterwert gelöst. Das Ergebnis wird mit $\underline{\underline{G'}}$ bezeichnet.

2. Danach werden anhand einer sich aus der Norm von $\underline{\underline{G'}}$ bestimmten Toleranzgrenze den Einträgen von $\underline{\underline{G'}}$ die qualitativen Werte ↑, ↓ oder o zugeordnet. Es ergibt sich so die Matrix G'.

3. In einer ersten Iteration wird G' als Lösungsmatrix G übernommen, G = G'. Ab der zweiten Iteration werden die Einträge von G' mit denen der Lösungsmatrix G verglichen. Unterscheiden sie sich, wird der entsprechende Eintrag in G durch x ersetzt,

$g_{ij} := g_{ij}$ wenn $g_{ij} = g'_{ij}$
$g_{ij} := x$ wenn $g_{ij} \neq g'_{ij}$

4. Die ersten drei Schritte werden wiederholt, bis eine festgelegte Anzahl an Iterationen erreicht ist.

Dabei kann die Anzahl der Iterationen fest vorgegeben oder über die Eigenschaften des Gleichungssystems (Dimension und Anzahl der symbolischen Parameter) abgeschätzt werden. Es ist auch denkbar, die Anzahl der Iterationen während der Durchführung des Algorithmus anhand der Verteilungen der in einem Schritt neu erkannten x-Einträge dynamisch über stochastische Betrachtungen abzuschätzen.

Bei diesem Ansatz ist zwar nicht garantiert, dass alle x-Einträge tatsächlich auch gefunden werden, so dass in der Lösungsmatrix G auch falsche Einträge stehen können. Jedoch lässt sich über eine entsprechend große Anzahl an Iterationen die Wahrscheinlichkeit dafür minimieren. Darüber hinaus kann in der Analyse beachtet werden, dass möglicherweise noch (wenige) Falscheinträge vorhanden sein können.

Die Parameterwerte werden in den einzelnen Iterationen stochastisch gewählt. Für positive Parameter kann dabei z.B. eine Gleichverteilung im Intervall [0,001, 10,001] gewählt werden, für negative Parameter eine Gleichverteilung im Intervall [-10,001, -0,0011]. Sind für die Parameter spezifische Intervalle bekannt, können auch diese verwendet werden. In diesem Fall ist es dann auch möglich, dass die Heuristik Einträge als "praktisch definit" erkennt, die bei der symbolischen Betrachtung als indefinit erkannt werden. In diesen Fällen liefert die Heuristik damit die im Hinblick auf die Analyse besseren Werte.

Aus der ermittelten Übertragungsmatrix G und einer qualitativen Messung der Ausgangsgrößen aus den Komponenten können die möglichen Ursachen für das Auftreten einer Anomalie bestimmt werden. Es ist bei der Analyse sinnvoll davon auszugehen, dass eine Ursache entweder null oder positiv ist. Für viele Ursachen ist dies prinzipbedingt der Fall, und dies reduziert die Anzahl der als möglich erkannten Ursachen deutlich. Ursachen, die positiv oder negativ sein können, können dann entweder gesondert betrachtet oder in zwei positive Ursachen aufgespalten werden, indem die betreffende Spalte in G dupliziert und negiert wird.

Bei der Analyse ist Folgendes zu berücksichtigen:

- Die qualitative Betrachtung sagt nichts darüber aus, wie groß (betragsmäßig) die Verstärkung zwischen einem Ein- und einem Ausgang ist, wenn der Wert "↑" oder "↓" ist. Die Verstärkung kann so klein sein, dass eine Änderung praktisch nicht erkannt wird und der Eintrag daher eher als "○" anzusehen wäre.
- Wenn die qualitative Übertragungsmatrix heuristisch bestimmt wurde, könnten dort falsche Einträge vorhanden sein.
- Die Erkennung der Symptome könnte ebenfalls fehlerhaft sein.

Für die Beurteilung der ermittelten Ursachen lassen sich beispielsweise für einen effizienteren Umgang mit den identifizierten Lösungen die folgenden Kenngrößen definieren ($\tilde{y}_i$ sind dabei Messwerte) :

- Anzahl der möglichen Vergleiche (Anzahl der von x verschiedenen Einträge der j-ten Spalte von G)

$$m_j = \left|\left\{i \mid g_{ij} \in \{\uparrow, \downarrow, \mathrm{o}\}\right\}\right|$$

- Anzahl der sicheren Übereinstimmungen

$$n_{D,j} = \left|\left\{i \mid g_{ij} \neq x, g_{ij} = \tilde{y}_i\right\}\right|$$

- Anzahl der sicheren Widersprüche

$$\bar{n}_{D,j} = \left|\left\{i \mid g_{ij} \neq x, g_{ij} \neq \tilde{y}_i\right\}\right|$$

- Differenz der sicheren Übereinstimmungen und sicheren Widersprüche

$$\Delta n_{D,j} = n_{D,j} - \bar{n}_{D,j}$$

Analog zu $\Delta n_{D,j}$, $\bar{n}_{D,j}$ und $n_{D,J}$ lassen sich auch Kenngrößen definieren, bei denen bei einem Eintrag $g_{ij} = \uparrow$ bzw. $\downarrow$ auch Messungen $\tilde{y}_i = o$ als widerspruchsfrei akzeptiert werden.

Auf gleiche Art und Weise können auch Kombinationen von Ursachen als mögliche Ursache zu einer gegebenen Messung geprüft werden. Hierzu wird anstelle des Spaltenvektors $g_j$ der Matrix G zu einer einzelnen Ursache die Summe der Spaltenvektoren betrachtet, die der zu betrachteten Kombination entsprechen. Werden die Indizes der einzelnen Ursachen einer Kombination in der Indexmenge $J_k$ zusammengefasst, kann dies folgendermaßen ausgedrückt werden:

$$g_{J_k} = \sum_{j \in J_k} g_j$$

Dabei gelten bezüglich der Addition die folgenden Regeln:

| + | ↑ | ↓ | ○ | x |
|---|---|---|---|---|
| ↑ | ↑ | x | ↑ | x |
| ↓ | x | ↓ | ↓ | x |
| ○ | ↑ | ↓ | ○ | x |
| x | x | x | x | x |

Für eine gegebene Messung werden die oben beschriebenen Maße für alle einzelnen Ursachen und alle Kombinationen von Ursachen bis zu einer maximalen Anzahl von "Kombinationslängen" berechnet. Die betrachteten Ursachen(-kombinationen) werden dann anhand der berechneten Kenngrößen nach verschiedenen Kriterien sortiert und tabellarisch dargestellt. Um die Anzeige der Ergebnisse übersichtlicher zu gestalten, können noch alle Einträge der Ergebnistabelle entfernt werden, deren Kenngrößen gewisse Grenzwerte nicht erreichen. Darüber hinaus können noch alle Einträge zu Ursachenkombinationen entfernt werden, die keine besseren Werte erreichen als die in dieser Kombination enthaltenen kürzeren Kombinationen.

Wenn die Ursachenkombination J = {1,2,3,4} einen Wert von $\Delta n_{D,j}$ = 6 erreicht und die Kombination J = {2, 3, 4} ebenfalls einen Wert von $\Delta n_{D,j}$ = 6 erreicht, wird die längere Kombination {1, 2, 3, 4} nicht mehr ausgegeben. Je nach Art der Kenngröße kann es dabei auch sinnvoll sein, zu fordern, dass die längere Kombination um einen bestimmten Faktor besser als die enthaltenen kürzeren Kombinationen sein muss.

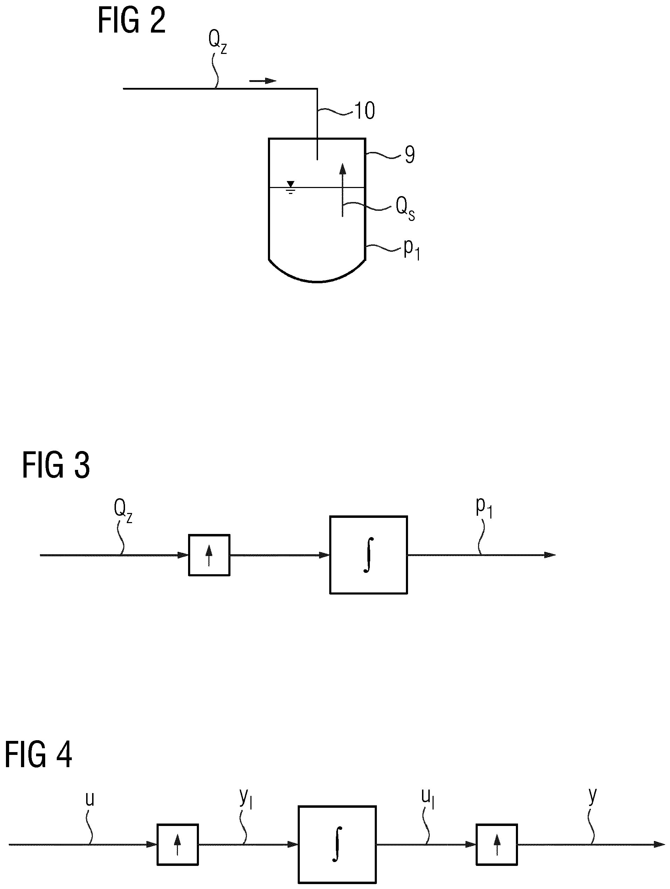

Im Rahmen einer besonders vorteilhaften Weiterbildung der Erfindung wird im Rahmen des Ermittelns eines qualitativen Zusammenhangs zwischen Eingangsgrößen und Ausgangsgrößen für im Wesentlichen jede Komponente der technischen Anlage zusätzlich eine zeitliche Integration der Eingangsgrößen und/oder der Ausgangsgrößen verwendet. Durch die zeitliche Integration können auch Zusammenhänge zwischen Eingangsgrößen und Ausgangsgrößen ermittelt werden, die zeitlich nicht konstant sind, sondern eine Dynamik aufweisen. Es sei auf die Beschreibung der FIG 2 verwiesen, anhand der eine solche zeitliche Integration und die Zusammenhänge zwischen Eingangsgrößen erläutert werden.

Bevorzugt wird dabei im Rahmen des Ermittelns der qualitativen Zusammenhänge zwischen Eingangsgrößen und Ausgangsgrößen die Annahme getroffen, dass sich ein Vorzeichen der integrierten Eingangsgrößen und/oder Ausgangsgrößen in einem für die zeitliche Integration verwendeten Zeitintervall nicht ändert. Auch hierzu sei auf die Beschreibung von FIG 2 verwiesen.

Besonders bevorzugt wird im Rahmen des Ermittelns des qualitativen Zusammenhangs zwischen Eingangsgrößen und Ausgangsgrößen eine Rückwirkung einer integrierten Eingangsgröße und/oder Ausgangsgröße auf die Eingangsgröße und/oder Ausgangsgröße nicht berücksichtigt. Damit ist nicht nur eine direkte Rückwirkung zwischen Eingangsgröße und/oder Ausgangsgröße gemeint, sondern es sind auch die Fälle eingeschlossen, bei denen die Rückwirkung über eine Integration über mehrere Eingangsgrößen und/oder Ausgangsgrößen erfolgt.

Im Rahmen des Ermittelns des qualitativen Zusammenhangs zwischen Eingangsgrößen und Ausgangsgrößen kann eine wechselseitige Rückwirkung einer integrierten Eingangsgröße und Ausgangsgröße auf die Eingangsgröße und die Ausgangsgröße nicht berücksichtigt werden. Hierdurch lässt sich für bestimmte Fallkonstellationen der qualitative Zusammenhang zwischen Eingangsgröße und Ausgangsgröße einfacher bestimmen.

Die obige Aufgabe wird zudem gelöst durch ein Computerprogramm mit durch einen Computer ausführbaren Programmcodeanweisungen zur Implementierung des zuvor erläuterten Verfahrens. Zudem wird die Aufgabe gelöst durch ein Speichermedium mit einem durch einen Computer ausführbaren, zuvor erläuterten Computerprogramm und ein Computersystem, auf dem ein Computerprogramm wie zuvor erläutert implementiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:

FIG 1    einen ersten realen Dreitankprüfstand einer technischen Anlage;

FIG 2    einen Tank mit einem Ausfluss über eine Drossel; und

FIG 3    einen zweiten realen Dreitankprüfstand einer technischen Anlage.

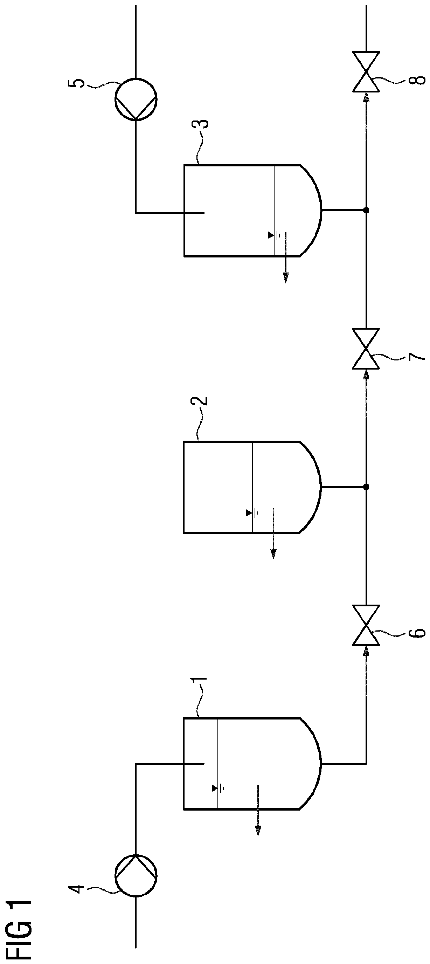

In FIG 1 ist ein realer Dreitankprüfstand einer technischen Anlage schematisch dargestellt. Der Dreitankprüfstand weist einen ersten Tank 1, einen zweiten Tank 2 und einen dritten Tank 3 auf. An den beiden äußeren Tanks 1, 3 in FIG 1 sind eine erste Pumpe 4 bzw. eine zweite Pumpe 5 angeschlossen, die über ein Steigrohr (nicht dargestellt), d. h. mit konstantem Gegendruck, Wasser in den jeweiligen Tank 1, 3 pumpen können.

Der erste Tank 1 ist mit dem zweiten Tank 2 mittels eines ersten Ventils 6 verbunden. Der zweite Tank 2 ist mit dem dritten Tank 3 mittels eines zweiten Ventils 7 verbunden. Der dritte Tank 3 ist mittels eines dritten Ventils 8 mit weiteren, nicht dargestellten Komponente verbunden.

Die Füllhöhen des Wassers in den drei Tanks 1, 2, 3 nehmen von dem ersten Tank 1 nach rechts zu dem dritten Tank 3 hin in der Figur ab. Es ergibt sich folgender qualitativer Zusammenhang zwischen den einzelnen Tanks 1, 2, 3:

| | VE1.zQ Pump1.z | VE2.zQ | VE3.zQ Pump2.z V3a.x | Pump1.n | Pump2.n V3a.zdP | V12.x | V12.zdP | V23.x | V23.zdP |
|---|---|---|---|---|---|---|---|---|---|
| VE1.p1 | ↓ | ↓ | ↓ | t | t | ↓ | t | ↓ | t |
| VE2.p1 | ↓ | ↓ | ↓ | t | t | ○ | ○ | ↓ | t |
| VE3.p1 | ↓ | ↓ | ↓ | t | t | ○ | ○ | ○ | ○ |
| yD12 | ↓ | ○ | ○ | t | ○ | ↓ | t | ○ | ○ |
| yD13 | ↓ | ↓ | ○ | t | ○ | ↓ | t | ↓ | t |
| yD23 | ↓ | ↓ | ○ | t | ○ | ○ | ○ | ↓ | t |

In der ersten Spalte der Tabelle sind Ausgangsgrößen als Symptome und in der ersten Zeile Eingangsgrößen als Ursachen abgebildet. Die Ausgangsgrößen sind folgendermaßen definiert:

VE1.p1 Druck am Boden des ersten Tanks 1
VE2.p1 Druck am Boden des zweiten Tanks 2
VE3.p1 Druck am Boden des dritten Tanks 3
yD12 = VE1.p1 - VE2.p1
yD13 = VE1.p1 - VE3.p1
yD23 = VE2.p1 - VE3.p1

Die Eingangsgrößen sind folgendermaßen definiert:

| | |
|---|---|
| VE1.zQ | Leckage aus dem ersten Tank 1 |
| VE2.zQ | Leckage aus dem zweiten Tank 2 |
| VE3.zQ | Leckage aus dem dritten Tank 3 |
| Pump1.z | Leistungsreduktion der ersten Pumpe 4 |
| Pump2.z | Leistungsreduktion der zweiten Pumpe 5 |
| Pump1.n | Erhöhung der Drehzahl der ersten Pumpe 4 |
| Pump2.n | Erhöhung der Drehzahl der zweiten Pumpe 5 |
| v12.x | Ventilstellung des ersten Ventils 6 |
| v23.x | Ventilstellung des zweiten Ventils 7 |
| v3a.x | Ventilstellung des dritten Ventils 8 |
| v12.zdP | Verstopfung des ersten Ventils 6 |
| v23.zdP | Verstopfung des zweiten Ventils 7 |
| v3a.zdP | Verstopfung des dritten Ventils 8 |

In der Tabelle sind Eingangsgrößen, die denselben qualitativen Zusammenhang mit bestimmten Ausgangsgrößen haben, jeweils in einer Spalte zusammengefasst, um die Lesbarkeit der Tabelle zu erhöhen.

"VE1.zQ" stellt eine beispielhafte Ursache dar und bedeutet, dass im ersten Tank 1 eine Leckage aufgetreten ist. Damit sinkt der Füllstand aller drei Tanks 1, 2, 3, da der Druck am Boden der Tanks 1, 2, 3 sinkt. Die drei Zellenelemente sind deshalb mit der qualitativen Aussage "↓" befüllt. Da die erste Pumpe 4 die gleiche Menge fördert wie bisher, im ersten Tank 1 aber ein Teil davon verloren geht, reduziert sich auch der Durchfluss durch das erste Ventil 6, das zweite Ventil 7 und das dritte Ventil 8, sodass auch die Differenzdrücke yD12, yD13 und yD23 kleiner werden müssen.

"Pump2.n" stellt eine weitere beispielhafte Ursache dar und bedeutet, dass die zweite Pumpe 5 mit einer höheren Drehzahl betrieben wird. Damit steigt der Füllstand aller drei Tanks 1, 2, 3 bzw. der jeweilige Druck am Boden, da mehr Wasser in den Dreitankprüfstand gelangt. Die drei Zellenelemente sind deshalb mit der qualitativen Aussage "↑" befüllt. Da die erste Pumpe 4 weiterhin die gleiche Wassermenge liefert, fließt auch durch das erste Ventil 6, das zweite Ventil 7 und das dritte Ventil 8 die gleiche Menge Wasser, sodass die Druckdifferenzen yd12, yD13, yD23 unverändert bleiben (Symbol: o).

Anhand dieses Beispiels wird ersichtlich, dass die Hinzunahme zusätzlicher Parameter wie hier der Druckdifferenzen positiv auf die Ermittlung originären Ursache für das Auftreten einer Anomalie wirken kann.

Mit dem Dreitankprüfstand wurden Messungen durchgeführt, indem verschiedene Phasen konstanter Störungen aufgebracht wurden:

    Phase 1: keine Ursache
    Phase 2: Pump1.n
    Phase 3: v23.zdP
    Phase 4: v23.zdP + v3a.zdP
    Phase 5: v3a.zdP
    Phase 6: VE2.zQ
    Phase 7: keine Ursache

Aus den gemessenen Verläufen wurden - in diesem Fall in allen Fällen korrekt - die qualitativen Abweichungen vom Normalzustand (Phase 1 und Phase 7) ermittelt.

Im Folgenden sind die Ergebnisse der Analyse, hier mit den Kenngrößen $\Delta n_{D,j}$ *(als* DnD *bezeichnet),* $\bar{n}_{D,j}$ *(als* nnD *bezeichnet)* und m für die sieben Phasen dargestellt. Dabei wurden alle Kombinationen von bis zu vier Ursachen berücksichtigt. (Die Spalte g stellt jeweils den (kombinierten) Spaltenvektor $g_{J_k}$ dar. Die Ursache 0 entspricht dem Test auf den störungsfreien Fall. Geklammerte Ursachen sind nicht unterscheidbar, mit "+" verbundene Ursachen stellen Kombinationen dar.)

Es zeigt sich, dass in allen Fällen die tatsächlich eingebrachte Ursache unter den als möglich erkannten und ausgegebenen Ursachen liegt, und auch als erste Möglichkeit (d.h. mit der höchsten Kennziffer 1) angeboten wird.

Phase 1

| Wahrscheinlichkeit | DnD | nnD | m | Mögliche Ursachen | g |
|---|---|---|---|---|---|
| 1 | 6 | 0 | 6 | 0 | 000000 |

Phase 2

| Wahrscheinlichkeit | DnD | nnD | m | Mögliche Ursachen | g |
|---|---|---|---|---|---|
| 1 | 6 | 0 | 6 | Pumpl.n | ↑↑↑↑↑↑ |
| 2 | 6 | 0 | 6 | (Pump2. n, v3a.zdP) + v12.zdP + v23.zdP | ↑↑↑↑↑↑ |
| 3 | 4 | 1 | 6 | (Pump2.n, v3a.zdP) + v12.zdP | ↑↑↑↑↑o |
| 4 | 4 | 1 | 6 | (Pump2.n, v3a.zdP) + v23.zdP | ↑↑↑o↑↑ |
| 5 | 4 | 1 | 6 | v12.zdP + v23.zdP | ↑↑o↑↑↑ |
| 6 | 2 | 2 | 6 | V23.zdP | ↑↑oo↑↑ |

Phase 3

| Wahrscheinlichkeit | DnD | nnD | m | Mögliche Ursachen | g |
|---|---|---|---|---|---|
| 1 | 6 | 0 | 6 | v23.zdP | ↑↑oo↑↑ |
| 2 | 2 | 2 | 6 | Pumpl.n | ↑↑↑↑↑↑ |

Phase 4

| Wahrscheinlichkeit | DnD | nnD | m | Mögliche Ursachen | g |
|---|---|---|---|---|---|
| 1 | 6 | 0 | 6 | (Pump2.n, v3a.zdP) + v23.zdP | ↑↑↑o↑↑ |
| 2 | 4 | 1 | 6 | Pumpl.n | ↑↑↑↑↑↑ |
| 3 | 4 | 1 | 6 | v23.zdP | ↑↑oo↑↑ |
| 4 | 2 | 2 | 6 | Pump2.n, v3a.zdP | ↑↑↑ooo |

Phase 5

| Wahrscheinlichkeit | DnD | nnD | m | Mögliche Ursachen | g |
|---|---|---|---|---|---|
| 1 | 6 | 0 | 6 | Pump2.n, v3a.zdP | ↑↑↑ooo |
| 2 | 1 | 1 | 3 | Pumpl.n + v12.x | x↑↑xx↑ |

Phase 6

| Wahrscheinlichkeit | DnD | nnD | m | Mögliche Ursachen | g |
|---|---|---|---|---|---|
| 1 | 6 | 0 | 6 | VE2.zQ | ↓↓↓o↓↓ |
| 2 | 6 | 0 | 6 | (VE3.zQ, Pump2.z, v3a.x) + v23.x | ↓↓↓o↓↓ |
| 3 | 4 | 1 | 6 | VE1.zQ, Pumpl.z | ↓↓↓↓↓↓ |
| 4 | 4 | 1 | 6 | V23.x | ↓↓oo↓↓ |
| 5 | 2 | 2 | 6 | VE3.zQ, Pump2.z, v3a.x | ↓↓↓ooo |

Phase 7

| Wahrscheinlichkeit | DnD | nnD | m | Mögliche Ursachen | g |
|---|---|---|---|---|---|
| 1 | 6 | 0 | 6 | 0 | 000000 |

In FIG 2 ist ein Tank 9 dargestellt, welcher einen Zufluss 10, aber keinen Abfluss aufweist. Der Volumenstrom $Q_Z$ in den Tank 9 und ein Druck $p_1$ auf dem Boden des Tanks 9 werden als Eingangsgrößen betrachtet. Die Veränderung des Füllstandes $Q_S$ in dem Tank 9 und der Druck $p_1$ werden als Ausgangsgrößen betrachtet. Die Q-Übertragungsmatrix, also der qualitative Zusammenhang zwischen den Eingangsgrößen und den Ausgangsgrößen, die aus dem in FIG 2 gezeigten topologischen Aufbau herleitbar ist, lautet in diesem Fall:

| | $Q_Z$ | $p_1$ |
|---|---|---|
| $p_1$ | ○ | ↑ |
| $Q_S$ | ↑ | ↓ |

Ein zu diesem System gehöriges Blockschaltbild ist in FIG 3 dargestellt. Dieses ist folgendermaßen zu lesen: Ein positiver Volumenstrom $Q_Z$ in den Tank 9 führt zu einer positiven Änderung des Druckes $p_1$ bzw. des Füllstandes $Q_S$ in dem Tank 9.

FIG 4 zeigt das Blockschaltbild aus FIG 3, wobei im Unterschied hierzu jedoch allgemeinere Bezeichnungen verwendet werden. Die Eingangsgröße wird mit u, die Ausgangsgröße mit y bezeichnet. Der Ausgang des Integrators (durch das Integralzeichen symbolisiert) wird mit $u_I$ und der Eingang des Integrators mit $y_I$ bezeichnet. Die Q-Übertragungsmatrix lautet damit:

| | $u$ | $u_I$ |
|---|---|---|
| $y$ | ○ | ↑ |
| $Y_I$ | ↑ | ○ |

Zwischen $u_I$ und $y_I$ besteht allgemein der Zusammenhang:

$$u_I = \int_0^{\Delta T} y_I(t)dt$$

Trifft man die Annahme, dass der Integrand $y_I$(t) sein Vorzeichen im betrachteten Integrationsintervall (0, $\Delta T$ ) nicht wechselt, und der Anfangswert entweder Null ist, oder zumindest das gleiche Vorzeichen wie $y_I$ hat, so gilt für die zu integrierende Größe $y_I$:

$$y_I = \uparrow u$$

Ein Zusammenhang zwischen der Eingangsgröße u und der Ausgangsgröße y ergibt sich daher im vorliegenden Fall durch eine Integration der Ausgangsgröße y.

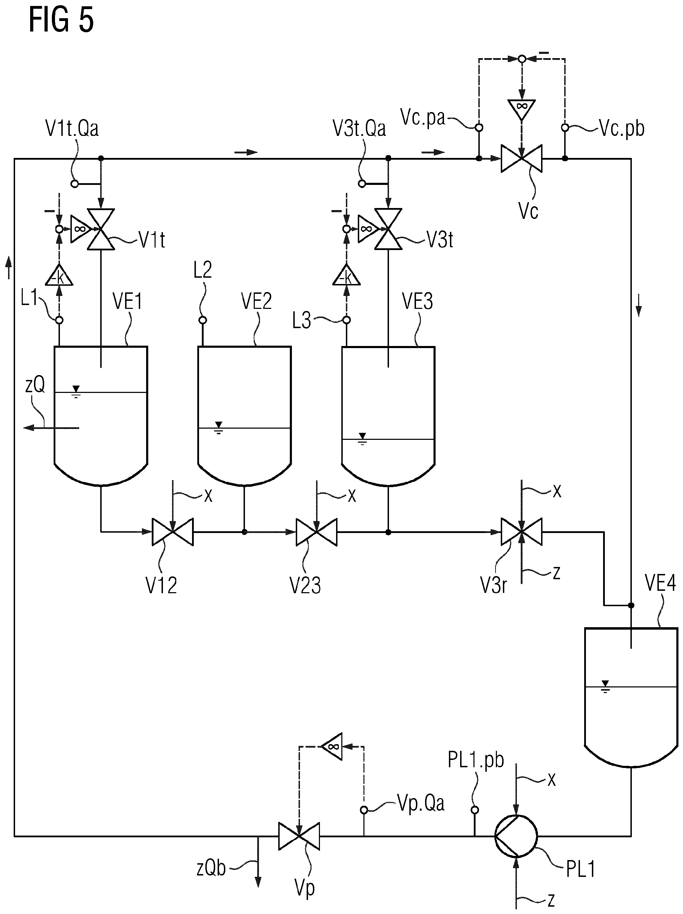

In FIG 5 ist ein zweiter realer Dreitankprüfstand einer technischen Anlage schematisch dargestellt. Der Dreitankprüfstand weist einen ersten Tank VE1, einen zweiten Tank VE2 und einen dritten Tank VE3 auf. Ein vierter Tank VE4 dient als Wasserreservoir.

In dem Dreitankprüfstand sind sieben Ventile Vp, V1t, V3t, Vc, V12, V23, V3r enthalten, von denen vier Ventile Vp, V1t, V3t, Vc geregelt betrieben werden. Das Ventil Vp wird zur Regelung des Volumenstroms, der an diesem Ventil gemessen wird, verwendet. Messdaten haben gezeigt, dass diese Regelung in der Regel stationär genau ist, so dass hier eine Reglerverstärkung von unendlich angenommen wird. Das Ventil Vc wird zur Regelung des Druckabfalls über dieses Ventil verwendet. Die Messdaten zeigen, dass diese Regelung stationär genau ist, so dass auch hier eine Reglerverstärkung von unendlich angenommen wird. Die beiden Regler V1t, V3t sind als Kaskadenregelung ausgeführt. Dabei wird in der inneren Kaskade der Durchfluss durch das jeweilige Zulaufventil geregelt. Diese Regelung folgt meistens der Sollgröße sehr gut, so dass diese hier als stationär genau modelliert wird. Die äußere Kaskade regelt die Füllhöhe bzw. den Druck an den beiden Tankböden der Tanks VE1, VE3. Hier wird (unabhängig von der tatsächlichen Reglerstruktur) während der Betriebsphasen keine stationäre Genauigkeit erreicht. Der Regler wird hier über eine endliche Verstärkung modelliert. D. h. es wird davon ausgegangen, dass die Abweichung der Stellgröße immer das gleiche Vorzeichen wie die Abweichung der Regelabweichung hat.

In der folgenden Tabelle sind die zur Verfügung stehenden Ausgangsgrößen (d.h. Messgrößen) aufgelistet:

| Messgröße / Ausgangsgröße | Beschreibung |
|---|---|
| V1t.Qa | Zufluss in Tank VE1 |
| V1t.x | Ventilstellung im Zufluss von Tank VE1 |

(fortgesetzt)

| Messgröße / Ausgangsgröße | Beschreibung |
|---|---|
| V3t.Qa | Zufluss in Tank VE3 |
| V3t.x | Ventilstellung im Zufluss von Tank VE3 |
| Vp.x | Ventilstellung von Vp |
| Vc.x | Ventilstellung des Durchflussregelventils Vc für den Hauptkreis |
| VE1.p1 | Füllhöhe Tank VE1 |
| VE2.p1 | Füllhöhe Tank VE2 |
| VE3.p1 | Füllhöhe Tank VE3 |

Die Anhand des beschriebenen Systems mit den erläuterten Regelungen ergeben sich die folgende Q-Übertragungsmatrix:

|  | PL1.z | PL1.n | V12.x | V23.x | V3r.x | Vp.zQb | VE1.zQ | V3r.zdP | P5.zdP |
|---|---|---|---|---|---|---|---|---|---|
| V1t.Qa | ○ | 0 | ↑ | ↑ | ↑ | 0 | ↑ | ↓ | 0 |
| V1t.x | ○ | 0 | X | X | ↑ | ↑ | ↑ | ↓ | ↓ |
| V3t.Qa | ○ | 0 | ↓ | ↓ | ↑ | 0 | ↑ | ↓ | 0 |
| V3t.x | ○ | 0 | X | X | ↑ | ↑ | ↑ | ↓ | ↓ |
| Vc.x | ○ | 0 | X | X | ↓ | ↓ | ↓ | ↑ | 0 |
| Vp.x | ↑ | ↓ | X | X | ↓ | ↓ | ↓ | ↑ | ↑ |
| VE1.p1 | 0 | 0 | ↓ | ↓ | ↓ | 0 | ↓ | ↑ | 0 |
| VE2.p1 | 0 | 0 | ↑ | ↓ | ↓ | 0 | ↓ | ↑ | 0 |
| VE3.p1 | 0 | 0 | ↑ | ↑ | ↓ | 0 | ↓ | ↑ | 0 |

Die drei Tanks VE1, VE2, VE3 sind als instationär, d.h. dynamisch, anzusehen. Dabei sind VE1.Qs, VE2.Qs, VE3.Qs die Eingänge und VE1.p1, VE2.p1, VE3.pl die Ausgänge der Integratoren der drei Tanks VE1, VE2, VE3. Die Q-Übertragungsmatrix bzw. der qualitative Zusammenhang werden dann als Basis für die weiteren erfindungsgemäßen Schritte verwendet, um die Ursachen für eine Anomalie (vgl. Beschreibung von FIG 1) zu ermitteln.

Obwohl die Erfindung im Detail durch die bevorzugte Ausführungsbeispiel näher illustriert und beschrieben wurde, so ist die Erfindung nicht auf die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Ermittlung einer Ursache für eine Anomalie beim Betrieb einer technischen Anlage, umfassend:

   a) Ermitteln eines qualitativen Zusammenhangs zwischen Eingangsgrößen und Ausgangsgrößen für eine Komponente (1, 2, 3, 9, VE1, VE2, VE3) der technischen Anlage anhand eines topologischen Aufbaus der technischen Anlage, wobei der Zusammenhang angibt, welchen Einfluss eine Eingangsgröße auf eine Ausgangsgröße aufweist,
   b) Wiederholen des Verfahrensschrittes a bei im Wesentlichen allen Komponenten (1, 2, 3, 9, VE1, VE2, VE3) eines Anlagenteils der technischen Anlage oder bei im Wesentlichen allen Komponenten (1, 2, 3, 9, VE1, VE2, VE3) der technischen Anlage,
   c) Betreiben der technischen Anlage und Ermitteln der Ausgangsgrößen,
   d) Feststellen wenigstens einer Anomalie als qualitative Abweichung einer Ausgangsgröße von ihrem Sollwert,
   e) Ermitteln von möglichen Ursachen für die Anomalie aus einer Verknüpfung der Anomalie mit dem zuvor bestimmten qualitativen Zusammenhang zwischen Eingangsgröße und Ausgangsgrößen der Komponenten (1, 2, 3, 9, VE1, VE2, VE3) der technischen Anlage,
   f) Hinterlegen der möglichen Ursachen in einem Datenspeicher und/oder visuelle Darstellung der möglichen Ursachen für einen Operator der technischen Anlage.

2. Verfahren nach Anspruch 1, bei dem in dem Datenspeicher zusätzlich eine Information darüber hinterlegt wird und/oder dem Operator der technischen Anlage visuell dargestellt wird, wie groß eine Wahrscheinlichkeit dafür ist, dass eine bestimmte, zuvor ermittelte Ursache der Anomalie zuzuordnen ist.

3. Verfahren nach Anspruch 2, bei dem Kenngrößen definiert und ausgewertet werden, um eine Aussage darüber treffen zu können, welche bestimmte, zuvor ermittelte Ursache der Anomalie zuzuordnen ist.

4. Verfahren nach einem der vorangegangen Ansprüche, bei dem dem qualitativen Zusammenhang jeweils ein quantitativer Zusammenhang zwischen der Eingangsgröße und der Ausgangsgröße hinzugefügt wird.

5. Verfahren nach einem der vorangegangenen Ansprüche, bei dem der qualitative Zusammenhang wenigstens vier Unterscheidungen umfasst:

   - eine Eingangsgröße mit einem ersten Vorzeichen bewirkt eine Ausgangsgröße mit dem ersten Vorzeichen,
   - eine Eingangsgröße mit einem ersten Vorzeichen bewirkt eine Ausgangsgröße mit dem zweiten, von dem ersten verschiedenen Vorzeichen,
   - die Eingangsgröße hat keinen Einfluss auf die Ausgangsgröße,
   - es ist nicht bekannt, ob die Eingangsgröße einen Einfluss auf die Ausgangsgröße hat.

6. Verfahren nach einem der vorangegangenen Ansprüche, bei dem im Rahmen des Ermittelns eines qualitativen Zusammenhangs zwischen Eingangsgrößen und Ausgangsgrößen für im Wesentlichen jede Komponente (1, 2, 3, 9, VE1, VE2, VE3) der technischen Anlage zusätzlich eine zeitliche Integration der Eingangsgrößen und/oder der Ausgangsgrößen verwendet wird.

7. Verfahren nach Anspruch 6, bei dem im Rahmen des Ermittelns der qualitativen Zusammenhänge zwischen Eingangsgrößen und Ausgangsgrößen die Annahme getroffen wird, dass sich ein Vorzeichen der integrierten Eingangsgrößen und/oder Ausgangsgrößen in einem für die zeitliche Integration verwendeten Zeitintervall nicht ändert.

8. Verfahren nach Anspruch 6 oder 7, bei dem im Rahmen des Ermittelns des qualitativen Zusammenhangs zwischen Eingangsgrößen und Ausgangsgrößen eine Rückwirkung einer integrierten Eingangsgröße und/oder Ausgangsgröße auf die Eingangsgröße und/oder Ausgangsgröße nicht berücksichtigt wird.

9. Verfahren nach einem der Ansprüche 6 bis 8, bei dem im Rahmen des Ermittelns des qualitativen Zusammenhangs zwischen Eingangsgrößen und Ausgangsgrößen eine wechselseitige Rückwirkung einer integrierten Eingangsgröße und Ausgangsgröße auf die Eingangsgröße und die Ausgangsgröße nicht berücksichtigt wird.

10. Computerprogramm mit durch einen Computer ausführbaren Programmcodeanweisungen zur Implementierung des Verfahrens nach einem der Ansprüche 1 bis 9.

11. Speichermedium mit einem durch einen Computer ausführbaren Computerprogramm gemäß Anspruch 10.

12. Computersystem, auf dem ein Computerprogramm nach Anspruch 10 implementiert ist.

FIG 1

FIG 2

$Q_Z$

10

9

$Q_S$

$p_1$

FIG 3

$Q_Z$

$\int$

$p_1$

FIG 4

$u$

$y_I$

$\int$

$u_I$

$y$

# FIG 5

| | Europäisches Patentamt | | |
|---|---|---|---|
| | European Patent Office | EUROPÄISCHER RECHERCHENBERICHT | **Nummer der Anmeldung** |
| | Office européen des brevets | | **EP 21 16 8664** |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H02 281106 A (MITSUBISHI ELECTRIC CORP) 16. November 1990 (1990-11-16) * das ganze Dokument * ----- | 1-3, 10-12 | INV. G05B23/02 |
| X | EP 0 333 689 B1 (IBM [US]) 29. Dezember 1993 (1993-12-29) * Spalte 8 * * Anspruch 1 * ----- | 1-3, 10-12 | |
| A | Venkatasubramanian Venkat ET AL: "A review of process fault detection and diagnosis: Part II: Qualitative models and search strategies", Computers & chemical engineering, 1. Januar 2003 (2003-01-01), Seiten 313-326, XP055844360, DOI: 10.1016/S0098-1354(02)00161-8 Gefunden im Internet: URL:https://doi.org/10.1016/S0098-1354(02)00161-8 [gefunden am 2021-09-24] * das ganze Dokument * ----- | 1-3, 10-12 | |
| A | Venkat Venkatasubramanian ET AL: "A review of process fault detection and diagnosis Part I: Quantitative model-based methods", Computers and Chemical Engineering, 15. März 2003 (2003-03-15), XP055270688, DOI: doi:10.1016/S0098-1354(02)00160-6 Gefunden im Internet: URL:http://www.sciencedirect.com/science/article/pii/S0098135402001606/pdfft?md5=b8bd1e27c89bf7253d1d389d837c6449&pid=1-s2.0-S0098135402001606-main.pdf [gefunden am 2016-05-04] * das ganze Dokument * ----- | 1-3, 10-12 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| **München** | **11. Oktober 2021** | **Marrone, Fabrizio** |

Europäisches
Patentamt

European
Patent Office

Office européen
des brevets

**Nummer der Anmeldung**

**EP 21 16 8664**

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

**Siehe Ergänzungsblatt B**

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**1-3, 10-12**

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

## MANGELNDE EINHEITLICHKEIT
## DER ERFINDUNG
## ERGÄNZUNGSBLATT B

**Nummer der Anmeldung**

**EP 21 16 8664**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3, 10-12

   statistische Ermittlung einer Ursache einer Anomalie
   ---

2. Anspruch: 4

   Erhöhung der Genauigkeit des Verfahrens, ohne den Aufwand signifikant zu erhöhen
   ---

3. Anspruch: 5

   symbolische Erläuterung von qualitativen Abhängigkeiten
   ---

4. Ansprüche: 6-9

   Ermittlung der Zusammenhänge zwischen Eingangsgrößen und Ausgangsgrößen, die zeitlich nicht konstant sind, sondern eine Dynamik aufweisen
   ---

**ANHANG ZUM EUROPÄISCHEN RECHERCHENBERICHT
ÜBER DIE EUROPÄISCHE PATENTANMELDUNG NR.**

EP 21 16 8664

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2021

| Im Recherchenbericht angeführtes Patentdokument | | Datum der Veröffentlichung | Mitglied(er) der Patentfamilie | | Datum der Veröffentlichung |
|---|---|---|---|---|---|
| JP H02281106 | A | 16-11-1990 | JP | H0769199 B2 | 26-07-1995 |
| | | | JP | H02281106 A | 16-11-1990 |
| EP 0333689 | B1 | 29-12-1993 | DE | 68911719 T2 | 23-06-1994 |
| | | | EP | 0333689 A1 | 20-09-1989 |
| | | | JP | H01248243 A | 03-10-1989 |
| | | | SE | 460386 B | 02-10-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2568348 A1
- EP 2587328 A1

- EP 2587329 A1

**In der Beschreibung aufgeführte Nicht-Patentliteratur**

- **VENKAT VENKATASUBRAMANIAN ; RAGHU-NATHAN RENGASWAMY ; KEWEN YIN ; SURYA N. KAVURI.** A review of process fault detection and diagnosis Part I: Quantitative model-based methods. *Computers and Chemical Engineering,* 2003, 293-31t
- **VENKAT VENKATASUBRAMANIAN ; RAGHU-NATHAN RENGASWAMY ; SURYA N. KAVURI.** A review of process fault detection and diagnosis Part II: Qualitative Models and Search Strategies. *Computers and Chemical Engineering,* 2003, 313-326

- **BORUTZKY, W.** Bond Graphs for Modelling, Control and Fault Diagnosis of Engineering Systems. Springer International Publishing Switzerland, 2017
- Optimal Adaptive Threshold and Mode Fault Detection for Model-Based Fault Diagnosis of Hybrid Dynamical Systems. **PRAKASH, O. ; SAMANTARAY, A. K. ; BHATTACHARYYA, R.** M. Sayed-Mouchaweh, Fault Diagnosis of Hybrid Dynamic and Complex Systems. Springer International Publishing AG, 2018, 45-78